# EUROPÄISCHE PATENTSCHRIFT

(11) **EP 3 033 248 B1**
(45) Veröffentlichungstag und Bekanntmachung des Hinweises auf die Patenterteilung: **10.10.2018**
(21) Anmeldenummer: 14736702.3
(22) Anmeldetag: 30.06.2014
(51) Int. Cl.: B60Q 1/14, F21S 41/143, F21S 41/657, F21S 41/663, F21S 41/686

(54) **VERFAHREN ZUM STEUERN EINER SCHEINWERFERANORDNUNG FÜR EIN FAHRZEUG UND SCHEINWERFERANORDNUNG**
METHOD FOR CONTROLLING A HEADLIGHT ARRANGEMENT FOR A VEHICLE AND SUCH A HEADLIGHT ARRANGEMENT
PROCÉDÉ PERMETTANT DE COMMANDER UN ENSEMBLE DE PROJECTEURS POUR VÉHICULE ET ENSEMBLE DE PROJECTEURS

(30) Priorität: 16.08.2013 DE 102013216318
(43) Veröffentlichungstag der Anmeldung: 22.06.2016
(73) Patentinhaber: Volkswagen Aktiengesellschaft, 38440 Wolfsburg (DE)
(72) Erfinder: KOETHER, Gunnar, 38104 Braunschweig (DE); THIEL, Alexander, 38118 Braunschweig (DE); MÜLLER, Michael, 38518 Gifhorn (DE); THAMM, Mathias, 39646 Oebisfelde (DE); VOGLER, Sebastian, 38448 Wolfsburg (DE); KIEL, Henning, 38444 Wolfsburg (DE); STINDL, Olaf, 38442 Wolfsburg (DE); BÖTTCHER, Anja, 37197 Hattorf (DE)
(86) Internationale Anmeldenummer: PCT/EP2014/063820
(87) Internationale Veröffentlichungsnummer: WO 2015/022115

(56) Entgegenhaltungen:
- EP-A1- 2 221 218
- EP-A2- 2 423 567
- DE-A1-102008 036 193
- DE-U1-202010 001 654
- DE-U1-202010 001 654

## Beschreibung

Die vorliegende Erfindung betrifft ein Verfahren zum Steuern einer Scheinwerferanordnung für ein Fahrzeug mit den Merkmalen vom Oberbegriff des Anspruchs 1.

Die Scheinwerfer eines Fahrzeugs haben die Aufgabe, bei schlechten Sichtverhältnissen, insbesondere bei Dunkelheit, die Umgebung in Fahrtrichtung von dem Fahrzeug, insbesondere die Fahrbahn, auszuleuchten. Zusätzlich dienen die Scheinwerfer als Erkennungsmerkmal für andere Verkehrsteilnehmer.

Es ist bekannt, für die Lichtemission in Fahrtrichtung Scheinwerfer vorzusehen, welche eine Abblendlichtfunktion und eine Fernlichtfunktion bereitstellen können. Dabei sorgt die Fernlichtfunktion für eine sehr umfassende Ausleuchtung der Umgebung. Sie besitzt jedoch den Nachteil, dass andere Verkehrsteilnehmer, insbesondere die Fahrer vorausfahrender und entgegenkommender Fahrzeuge, geblendet werden. Mit dem Abblendlicht kann hingegen eine Lichtverteilung erzeugt werden, welche andere Verkehrsteilnehmer nicht blendet. Die Ausleuchtung der Umgebung ist jedoch sehr viel geringer als bei der Fernlichtfunktion. Aufgrund der mittlerweile sehr hohen Verkehrsdichten kann die Fernlichtfunktion nur noch sehr selten eingesetzt werden. Es besteht daher ein Bedürfnis, Scheinwerferanordnungen bereitzustellen, die eine bessere Ausleuchtung als die herkömmliche Abblendlichtfunktion bereitstellen, die jedoch nicht wie die Fernlichtfunktion andere Verkehrsteilnehmer blenden.

Dazu ist aus den Druckschriften DE 10 2009 054 227 A1, DE 10 2009 054 228 A1, DE 10 2009 054 238 A1, DE 10 2009 054 248 A1 und DE 10 2009 054 249 A1 ein Scheinwerfer bekannt, mit welchem andere Verkehrsteilnehmer aus der Fernlichtfunktion ausmaskiert werden können, so dass sie zu keiner Zeit geblendet werden. Der Scheinwerfer beruht dabei auf einem mechanischen System, bei dem die Ausmaskierung durch im Strahlengang bewegbare Blenden und eine Leuchtweitenregulierung durch Schwenken des Scheinwerfers realisiert werden. Diese Lichtverteilung, wird in den Druckschriften und auch im Folgenden als maskiertes Dauerfernlicht bezeichnet. Die von diesem mechanischen System erzeugte Lichtverteilung stößt vor allem in den Außenbereichen der Lichtverteilung aufgrund technischer Begrenzungen und optischer Eigenschaften an seine Grenzen. Dort kann in der Regel keine ausreichende Beleuchtung mehr bereit gestellt werden.

Weiterhin bekannt sind sogenannte Matrixscheinwerfer, welche in einer Matrix angeordnete Lichtquellen aufweisen. Bei Matrixscheinwerfern werden unterschiedliche Lichtverteilungen durch das Ansteuern unterschiedlicher Lichtquellen in der Matrix erreicht. Die Lichtquellen bei Matrixscheinwerfern sind in der Regel Leuchtdioden. Die Technologie von Matrixscheinwerfern beruht daher im Allgemeinen auf rein elektronischen Vorgängen. Beispiele zu Matrixscheinwerfern und Verfahren zu deren Steuerung sind aus den Druckschriften DE 100 09 782 A1, DE 10 2009 060 781 A1 und DE 10 2011 112 716 A1 bekannt. Matrixscheinwerfer sind allerdings aufgrund der hohen Kosten für Leuchtdioden sehr kostspielig. Weiterhin weisen auch Leuchtdioden-Matrixscheinwerfer Nachteile auf, wie z.B. eine erhöhte Hitzeentwicklung im Scheinwerfer. Weiterhin entsteht durch eine Anordnung der Leuchtdioden in Reihen eine erkennbar inhomogene streifenartige Lichtverteilung.

Der Druckschrift DE 10 2008 036 193 A1 ist ein Verfahren mit den Merkmalen vom Oberbegriff des Anspruchs 1 sowie eine Scheinwerferanordnung mit den Merkmalen vom Oberbegriff zu entnehmen. Die Druckschriften DE 20 2010 001 654 U1 sowie EP 2 221 218 A1 offenbaren Scheinwerfer mit bewegliche Blenden und LED-Arrays aufweisende Lichtmodule, bei denen durch Überlagerung von Teillichtverteilungen eine Gesamtlichtverteilung erzeugbar ist, die auf der einen Seite im Fernlichtbetrieb eine bessere Ausleuchtung ermöglicht, auf der anderen Seite die Gefahr von Blendung anderer Verkehrsteilnehmer reduziert.

Schließlich ist aus der EP 2 423 567 A2 ein Scheinwerfer für ein Fahrzeug bekannt, bei der durch ein bewegbares Element auf einem schwenkbaren Träger gehaltene Leuchtdioden so abgeschattet werden können, dass deren Licht nur auf Teilbereiche einer Reflexionsfläche fällt. Somit ist trotz eingeschaltetem Fernlicht eine blendfreie Gesamtlichtverteilung erzeugbar.

Der vorliegenden Erfindung liegt die Aufgabe zugrunde, ein Verfahren und eine Vorrichtung bereitzustellen, durch welche eine umfassende Beleuchtung der Fahrzeugumgebung bereitgestellt werden kann.

Diese Aufgabe wird durch ein Verfahren nach Anspruch 1 und eine Scheinwerferanordnung nach Anspruch 8 gelöst. Vorteilhafte Ausgestaltungen und Weiterbildungen sind Gegenstände der abhängigen Ansprüche.

Bei dem erfindungsgemäßen Verfahren wird eine erste Teillichtverteilung einer Lichtfunktion von den ersten Modulen durch Verändern einer Position des zumindest einen bewegbaren Elemente erzeugt, eine zweite Teillichtverteilung der gleichen Lichtfunktion von den zweiten Modulen durch Ansteuern einzelner Lichtquellen oder Gruppen von Lichtquellen der Vielzahl von Lichtquellen erzeugt, und die Gesamtlichtverteilung der Lichtfunktion wird dadurch erzeugt, dass die erste Teillichtverteilung und die zweite Teillichtverteilung überlagert werden. Je nach Ausgestaltung des bewegbaren Elementes kann mit Verändern einer Position des zumindest einen bewegbaren Elementes auch eine Drehung um eine Achse des bewegbaren Elementes gemeint sein.

Das Verfahren hat den Vorteil, dass die Lichtfunktion durch eine Kombination einer durch ein mechanisch betriebenes Modul erzeugten Teillichtverteilung und einer durch ein elektronisch betriebenes Modul erzeugten Teillichtverteilung erzeugt wird. Dadurch können die Vorteile beider technischer Eigenschaften ausgenutzt werden. Insbesondere wird durch die Kombination der beiden Module die streifenartige Lichtverteilung, welche beispielsweise durch eine Leuchtdioden-Matrix entsteht, durch die Überlagerung der Lichtverteilung des mechanisch betriebenen Moduls geglättet. Dadurch wird eine hohe Homogenität der Lichtverteilung erreicht.

In einer Eigenschaft der Erfindung wird zumindest ein Verkehrsteilnehmer in Richtung der Lichtemission der Scheinwerferanordnung erfasst. Die erste Teillichtverteilung wird dann derart geregelt, dass sie einen Mittelbereich mit einer Leuchtweite aufweist, die geringer als der Abstand zu dem erfassten Verkehrsteilnehmer ist, und zwei Seitenbereiche, welche beidseitig neben dem Mittelbereich erzeugt werden, mit Leuchtweiten aufweist, die größer als der Abstand zu dem erfassten Verkehrsteilnehmer sind. Die zweite Teillichtverteilung wird derart geregelt, dass sie nur in den Seitenbereichen der ersten Teillichtverteilung Leuchtweiten aufweist, die größer als der Abstand zu dem erfassten Verkehrsteilnehmer sind. Dies hat insbesondere den Vorteil, dass andere Verkehrsteilnehmer aus der Gesamtlichtverteilung ausmaskiert werden und somit nicht geblendet werden. Dies stellt insbesondere die bereits erwähnte maskierte Dauerfernlichtfunktion bereit.

Betrachtet man die Hell-Dunkel-Grenze des maskierten Dauerfernlichts auf einem senkrecht angeordneten Messschirm, wird insbesondere vor dem erfassten Verkehrsteilnehmer eine horizontale Hell-Dunkel-Grenze gebildet und neben dem erfassten Verkehrsteilnehmer wird eine senkrechte Hell-Dunkel-Grenze gebildet, welche der höheren Leuchtweite in dem Bereich neben dem erfassten Verkehrsteilnehmer entspricht. Die Leuchtweite im Mittelbereich, welche bei der zweiten Gesamtlichtverteilung insbesondere bis zum erfassten Verkehrsteilnehmer reicht, wird bevorzugt durch eine bereits vorhandene Leuchtweitenregulierung geregelt. Da die Hell-Dunkel-Grenze im Mittelbereich lediglich von dem ersten Modul bereitgestellt wird, kann diese Leuchtweitenregulierung durch ein Schwenken lediglich des ersten Moduls erreicht werden.

Unter dem Begriff *Leuchtweite* wird im Sinne der Erfindung eine winkelabhängige Entfernung auf der Straße verstanden, bei der die Lichtintensität einen Grenzwert unterschreitet. In Entfernungen, die über die Leuchtweite hinausgehen, ist die Lichtintensität insbesondere so gering, dass andere Verkehrsteilnehmer nicht mehr geblendet werden. Der Winkel ist insbesondere ein Horizontalwinkel, der von einer Längsachse durch einen Scheinwerfer oder eine Scheinwerferanordnung und einer Verbindungslinie von einem Punkt auf der Hell-Dunkel-Grenze und dem Schnittpunkt der Längsachse mit einer Querachse, welche durch den Scheinwerfer bzw. die Scheinwerferanordnung führt, gebildet wird.

In einer Ausgestaltuung wird die Hell-Dunkel-Grenze der Gesamtlichtverteilung in einen fahrzeugnahen und einen fahrzeugfernen Bereich aufgeteilt, wobei der fahrzeugnahe Bereich von der ersten Teillichtverteilung und der fahrzeugferne Bereich von der zweiten Teillichtverteilung erzeugt wird. Dies bewirkt, dass die unterschiedlichen Eigenschaften der ersten und zweiten Teillichtverteilungen zum Vorteil für die Gesamtlichtverteilung verwendet werden können. So kann eine Verbreiterung der Hell-Dunkel-Grenze der Gesamtlichtverteilung nach vorne erreicht werden. Außerdem kann die Hell-Dunkel-Grenze der ersten Teillichtverteilung dort breiter sein, wo die zweite Teillichtverteilung aufgrund technischer Grenzen des elektronischen Moduls keine ausreichend breite Hell-Dunkel-Grenze erzeugen kann. Die zweite Teillichtverteilung hingegen kann dort breiter sein, wo sich die Breite der Hell-Dunkel-Grenze der ersten Teillichtverteilung aufgrund technischer Grenzen des mechanisch betriebenen Moduls bereits wieder verschmälert oder sich nicht weiter verbreitert. Für den fahrzeugfernen Bereich bedeutet dies also eine breitere Gesamtlichtverteilung, die eine bessere Ausleuchtung in den Seitenbereichen bereitstellt.

In einer weiteren Ausgestaltung wird durch den Mittelbereich und die Seitenbereiche in der Gesamtlichtverteilung ein lichtfreier Korridor gebildet, wobei der lichtfreie Korridor eine von dem Mittelbereich in Querrichtung zum Fahrzeug erzeugte Kante und zwei von den Seitenbereichen in Längsrichtung zum Fahrzeug erzeugte Kanten aufweist, wobei die von den Seitenbereichen erzeugten Kanten im Wesentlichen von der zweiten Teillichtverteilung erzeugt werden und der Abstand in Querrichtung zwischen den von den Seitenbereichen erzeugten Kanten von der Breite des erfassten Verkehrsteilnehmers abhängt. Werden die von den Seitenbereichen erzeugten Kanten im Wesentlichen von der zweiten Teillichtverteilung erzeugt, so hat dies den Vorteil, dass der lichtfreie Korridor nah an den erfassten Verkehrsteilnehmer herangeführt werden kann. Dies ist möglich, da durch die Matrix von Lichtquellen ausgewählte Reihen von Lichtquellen die Seitenbereiche erzeugen, welche wiederum die Kanten der Seitenbereiche erzeugen. Dadurch ist eine im Wesentlichen lineare Lichtabstrahlung möglich, die die Kanten der Seitenbereiche bis auf wenige cm an den erfassten Verkehrsteilnehmer heranführen kann. Dadurch entstehen bis auf den lichtfreien Korridor keine großen Lücken in der Gesamtlichtverteilung.

Insbesondere wird in Abhängigkeit von dem horizontalen Winkel zwischen der Fahrtrichtung des Fahrzeugs und der Verbindungslinie von dem Fahrzeug zu dem erfassten Verkehrsteilnehmer die Leuchtweite der ersten Teillichtverteilung in zumindest einem Seitenbereich derart abgesenkt, dass ab einem bestimmten Winkel der Seitenbereich nur von der zweiten Teillichtverteilung erzeugt wird. In der Regel ist das Absenken der Leuchtweite in zumindest einem Bereich begrenzt durch die technischen Grenzen mechanisch gesteuerter Module und durch die optischen Eigenschaften von bewegbaren Elementen, die in Strahlengänge eingeführt werden. Die Veränderung der Position von bewegbaren Elementen in einem Strahlengang führt nämlich insbesondere in weiter Entfernung zu erheblichen Veränderungen in der Lichtverteilung. Vor allem in einer Extremstellung der bewegbaren Elemente, also beispielsweise ganz außen im ersten Modul, führt dies dazu, dass in einem der beiden Seitenbereichen oder in beiden Seitenbereichen keine Ausleuchtung aufgrund der ersten Teillichtverteilung mehr möglich ist. Um zu vermeiden, dass diese Seitenbereiche unbeleuchtet bleiben, kann vorteilhafterweise die zweite Teillichtverteilung dort eine Ausleuchtung bereitstellen. Dies wiederum gewährleistet eine umfassendere Ausleuchtung der Umgebung.

Bevorzugt wird die zweite Teillichtverteilung von zumindest zwei Lichtstrahlen erzeugt, wobei zumindest einer dieser beiden Lichtstrahlen in Abhängigkeit von dem horizontalen Winkel zwischen der Fahrtrichtung des Fahrzeugs und der Verbindungslinie von dem Fahrzeug zu dem erfassten Verkehrsteilnehmer in zwei Teillichtstrahlen unterteilt wird, so dass ein Teillichtstrahl den einen Seitenbereich alleine erzeugt und der andere Teillichtstrahl den anderen Seitenbereich gemeinsam zumindest mit dem anderen Lichtstrahl der zweiten Teillichtverteilung erzeugt. Dabei wird der eine Lichtstrahl insbesondere von dem zweiten Modul des rechten Scheinwerfers und der andere Lichtstrahl von dem zweiten Modul des linken Scheinwerfers erzeugt. Dadurch kann vorteilhafterweise gewährleistet werden, dass andere Verkehrsteilnehmer auch in engen Kurven oder bei geringen Abständen zu entgegenkommenden Verkehrsteilnehmer nicht geblendet werden.

Bevorzugt wird die zweite Teillichtverteilung in den Seitenbereichen in mehrere Teilbereiche aufgeteilt, wobei die Helligkeit vom innersten Teilbereich zum äußersten Teilbereich abfällt. Dadurch wird vorteilhafterweise vermieden, dass zwischen dem Bereich der Lichtverteilung und dem nicht beleuchteten Umfeld die Helligkeit plötzlich abfällt. Ein weicher Übergang zwischen Lichtverteilung und Umfeld wird ermöglicht.
Bevorzugt ist die Lichtfunktion eine Fernlichtfunktion. Dies ist deswegen vorteilhaft, da dann auch auf Strecken, die schlecht beleuchtet sind, wie z.B. Autobahnen und Landstraßen, auf denen eine Abblendlichtfunktion keine ausreichende Ausleuchtung bietet, eine umfassende Beleuchtung der Umgebung bereitgestellt werden kann.
Des Weiteren wird eine Scheinwerferanordnung für ein Fahrzeug bereitgestellt. Die erfindungsgemäße Scheinwerferanordnung weist zumindest zwei beabstandeten Scheinwerfern auf, mittels welchen eine Gesamtlichtverteilung erzeugbar ist, wobei beide Scheinwerfer jeweils zumindest ein erstes und ein zweites Modul umfassen, welche separat voneinander angeordnet sind. Dabei umfasst das erstes Modul jeweils zumindest eine Lichtquelle und zumindest ein bewegbares Element, welches in den Strahlengang des von der Lichtquelle emittierten Lichts bringbar ist. Das zweite Modul umfasst jeweils eine Vielzahl von in einer Matrix angeordneten Lichtquellen. Ferner weist die erfindungsgemäße Scheinwerferanordnung eine Steuervorrichtung auf, mit welcher die ersten Module so ansteuerbar sind, dass durch Verändern einer Position des zumindest einen bewegbaren Elementes eine erste Teillichtverteilung einer Lichtfunktion erzeugbar ist, und mit welcher das zweite Modul so ansteuerbar ist, dass durch Ansteuern einzelner Lichtquellen oder Gruppen von Lichtquellen der Vielzahl von Lichtquellen eine zweite Teillichtverteilung der gleichen Lichtfunktion erzeugbar ist. Mit der Steuervorrichtung sind weiterhin die Scheinwerfer so ansteuerbar, dass durch Überlagern der ersten und der zweiten Teillichtverteilung die Gesamtlichtverteilung erzeugbar ist.

Die erfindungsgemäße Scheinwerferanordnung ist so ausgebildet, dass sie das erfindungsgemäße Verfahren vollständig ausführen kann.

Dafür weist die Scheinwerferanordnung zusätzlich eine Einrichtung zum Erfassen von Verkehrsteilnehmern in Fahrtrichtung vor dem Fahrzeug auf. Die Steuervorrichtung ist dann auch mit der Einrichtung zum Erfassen gekoppelt, z.B. über eine zweite Steuervorrichtung.
Insbesondere sind die zumindest eine Lichtquelle des ersten Modul und/oder die Vielzahl von Lichtquellen des zweiten Moduls Leuchtdioden. Das bewegbare Element des ersten Moduls kann in ihrer Position veränderbare Blenden umfassen. Weiterhin kann das bewegbare Element auch eine Blendenwelle mit separaten Wellenabschnitten sein, wobei die separaten Wellenabschnitte unterschiedliche Brennlinien aufweisen. Dabei ist mit zumindest einer dieser Brennlinien die ersten Teillichtverteilung erzeugbar.

Im Folgenden wird die Erfindung anhand von Ausführungsbeispielen mit Bezug zu den Zeichnungen erläutert.
- Figur 1: zeigt den schematischen Aufbau eines Ausführungsbeispiels eines Scheinwerfers der erfindungsgemäßen Scheinwerferanordnung,
- Figur 2a: zeigt schematisch ein Ausführungsbeispiel des ersten Moduls eines Scheinwerfers,
- Figur 2b: zeigt schematisch ein Ausführungsbeispiel des zweiten Moduls eines Scheinwerfers,
- Figur 3: zeigt schematisch ein Ausführungsbeispiel der erfindungsgemäßen Scheinwerferanordnung,
- Figuren 4a-c: zeigen eine Überlagerung erster und zweiter Teillichtverteilungen einer Fernlichtfunktion ohne Blenden, die in den Strahlengang des Lichts eingebracht wurden, das von der Lichtquelle des ersten Moduls emittiert wurde, und zwar in verschiedenen Verkehrssituationen,
- Figuren 5a, c, e: zeigen erste Teillichtverteilungen einer maskierten Dauerfernlichtfunktion in den in Figuren 4a bis c gezeigten Fahrsituationen mit erfasstem vorausfahrenden Verkehrsteilnehmer,
- Figuren 5b, d,: f zeigen Lichtverteilungen bei einer Überlagerung der ersten und zweiten Teillichtverteilungen in denselben Fahrsituationen wie in Figuren 5a, c und e mit erfasstem vorausfahrenden Verkehrsteilnehmer,
- Figuren 6a, c, e: zeigen erste Teillichtverteilungen einer maskierten Dauerfernlichtfunktion in den in Figuren 4a bis c gezeigten Fahrsituationen betrachtet auf einem senkrecht angeordneten Messschirm mit erfasstem entgegenkommenden Verkehrsteilnehmer und
- Figuren 6b, d, f: zeigen Lichtverteilungen bei einer Überlagerung der ersten und zweiten Teillichtverteilungen in denselben Fahrsituationen, wie in Figuren 6a, c und e gezeigt, mit erfasstem entgegenkommenden Verkehrsteilnehmer,

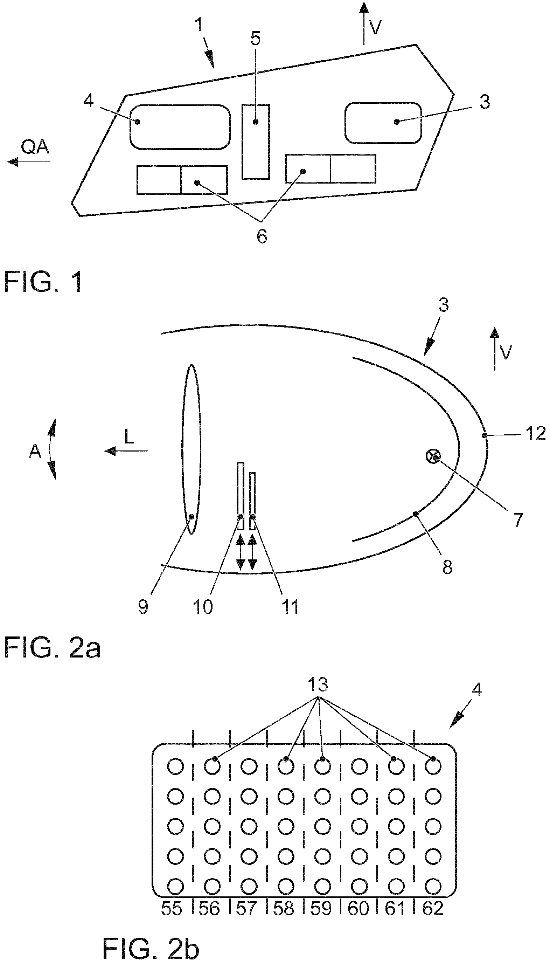

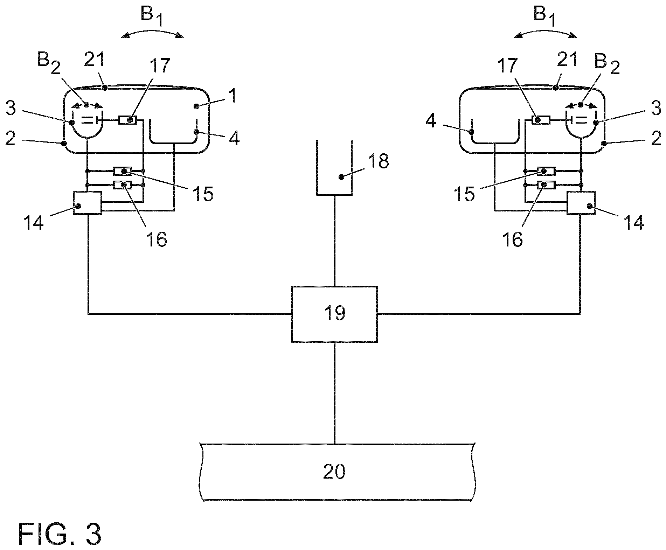

Die Scheinwerferanordnung, die allgemein in Figur 3 gezeigt ist, umfasst zwei beabstandete Scheinwerfer 1 und 2, die vorne auf der rechten und linken Seite des Fahrzeugs auf an sich bekannte Weise angeordnet sind. Einer dieser Scheinwerfer 1, 2 ist in Fig. 1 gezeigt. Der auf der anderen Seite angeordnete Scheinwerfer 2 ist spiegelverkehrt im Wesentlichen identisch aufgebaut.

In Figur 1 ist ein Schnitt durch den linken Scheinwerfer 1 in einer Ebene dargestellt, die parallel zu der von der Fahrzeugquerachse QA und der Vertikalen V aufgespannten Ebene ist. Der Scheinwerfer 1 umfasst ein erstes 3 und ein zweites Modul 4. Mit dem ersten Modul 3 ist eine erste Teillichtverteilung und mit dem zweiten Modul eine zweite Teillichtverteilung erzeugbar, welche eine gleiche Lichtfunktion erzeugen. Weiterhin umfasst der Scheinwerfer 1 zusätzliche Module 5 und 6, mittels welcher zusätzliche Lichtfunktionen realisiert werden können. Dabei kann das Modul 5 beispielsweise ein Kurvenlicht realisieren und das Modul 6 eine Vorfeldausleuchtung einer Abblendlichtfunktion bereitstellen.

In Figur 2a ist ein Ausführungsbeispiel des ersten Moduls 3 im Detail gezeigt. Das erste Modul 3 ist dabei als Projektionsmodul ausgebildet. Das erste Modul 3 umfasst auf an sich bekannte Art und Weise eine Lichtquelle 7, die von einem als Rotationsellipsoid ausgebildeten Reflektor 8 umgeben ist. Der Reflektor 8 weist somit zwei Brennpunkte auf. Die Lichtquelle 7 befindet sich in einem der Brennpunkte des Reflektors 8. Das von der Lichtquelle 7 emittierte Licht wird von dem Reflektor 8 in Lichtemissionsrichtung L des ersten Moduls 3 in Richtung einer Projektionslinse 9 reflektiert. Eine Blendenanordnung mit den flächigen Blenden 10 und 11 ist an dem Brennpunkt der Projektionslinse 9 und nahe dem zweiten Brennpunkt des Reflektors 8 angeordnet. Die Normalen der flächigen Blenden 10 und 11 sind im Wesentlichen parallel zur Lichtemissionsrichtung L ausgerichtet. Die Lichtquelle 7, der Reflektor 8, die Linse 9 und die Blenden 10, 11 sind innerhalb eines Gehäuses 12 angeordnet. Die Form der Hell-Dunkel-Grenze der ersten Teillichtverteilung des ersten Moduls 3 lässt sich dadurch verändern, dass die Blenden 10 und 11 in vertikaler und/oder horizontaler Richtung im Strahlengang des von der Lichtquelle 7 emittierten Lichts bewegt werden. Mit den Blenden 10 und 11 kann also sowohl eine vertikale als auch eine horizontale Hell-Dunkel-Grenze erzeugt werden, wobei sich die vertikale Hell-Dunkel-Grenze im Wesentlichen stufenlos nach rechts und links verschieben lässt und die horizontale Hell-Dunkel-Grenze im Wesentlichen stufenlos nach oben und unten verschieben lässt. Alternativ wird eine Verschiebung der horizontalen Hell-Dunkel-Grenze auch durch ein Schwenken des ersten Moduls 3 um eine horizontale Achse verwirklicht. Eine Blende 11, welche in horizontaler Richtung im Strahlengang bewegbar ist, ist dann nicht notwendig. Auch eine Kombination aus bewegbaren Blenden 10, 11 und schwenkbarem ersten Modul 3 um eine horizontale und eine vertikale Achse ist möglich.

In Figur 2b ist ein Ausführungsbeispiel des zweiten Moduls 4 aus einer Sicht auf das Fahrzeug, in dem die Scheinwerferanordnung angeordnet ist, gezeigt. Das zweite Modul 4 umfasst eine Vielzahl von Lichtquellen 13, welche Leuchtdioden sind, die in einem Gehäuse angeordnet sind. Die Leuchtdioden sind in vertikale Reihen 55 bis 62 in der Matrix aufgeteilt. Die Reihen 55 bis 62 sind einzeln und/oder gemeinsam ansteuerbar, so dass unterschiedliche Teillichtverteilungen erzeugbar sind. Dies wird später noch näher erläutert. Das von den Leuchtdioden 13 emittierte Licht wird in Lichtemissionsrichtung L abgestrahlt. Der Anzahl der pro vertikaler Reihe angeordneter Leuchtdioden kann dabei beliebig sein. Insbesondere kann lediglich eine Leuchtdiode pro vertikaler Reihe angeordnet sein.

Mit Bezug zur Figur 3 wird im Folgenden ein Ausführungsbeispiel der Scheinwerferanordnung beschrieben, welche auf der rechten und linken Seite jeweils einen Scheinwerfer 1, 2 umfasst, wie er in Figur 1 gezeigt ist.

Die Scheinwerfer 1, 2 sind jeweils mit einem Steuergerät 14 verbunden. Mittels der Steuergeräte 14 werden die Teillichtverteilungen der Scheinwerfer 1 und 2 gesteuert, welche überlagert eine Gesamtlichtverteilung ergeben.

Die Steuergeräte 14 steuern eine Leuchtweitenregulierung für die Scheinwerfer 1 und 2, bei welcher die Scheinwerfer 1 und 2 um eine horizontale Achse mittels der Aktuatoren 16 schwenkbar sind. Ferner steuern die Steuergeräte 14 die Aktuatoren 15, mit denen die Scheinwerfer 1 und 2 um eine vertikale Achse schwenkbar sind. Mittels der Aktuatoren 15 kann die Lichtemissionsrichtung L des Scheinwerfers 1 bzw. des Scheinwerfers 2 in Richtung des Pfeils B₁ geschwenkt werden. Die Aktuatoren 15 sind beispielsweise Teil eines bereits vorhandenen Kurvenlichts. Weiterhin sind auch die ersten Module 3 alleine mittels der Aktuatoren 16 um eine horizontale Achse schwenkbar, so dass sie in Richtung des Pfeils A (siehe Figur 2a) geschwenkt werden, und sind mittels der Aktuatoren 15 um eine vertikale Achse schwenkbar, so dass sie in Richtung des Pfeils B₂ geschwenkt werden. Die ersten Module 3 sind dabei unabhängig voneinander schwenkbar.

Weiterhin steuern die Steuergeräte 14 die vertikale und/oder horizontale Lage der Blenden 10 und 11 des ersten Moduls 3 für den rechten und linken Scheinwerfer 1, 2 mittels der Aktuatoren 17. Die Aktuatoren 17 umfassen einen Schrittmotor, dessen Welle sich um eine Drehachse dreht. Mit dieser Drehachse ist über ein radiales Verbindungselement ein Stift gekoppelt, der sich beim Betrieb des Schrittmotors auf einer Kreisbahn bewegt.

Die Art und Weise, wie verschiedene erste Teillichtverteilungen durch die Bewegung der Blenden 10 und 11 erzeugt werden können, ist detailliert beispielsweise in der DE 10 2007 045 150 A1 beschrieben, deren diesbezüglicher Inhalt durch Bezugnahme in die vorliegende Anmeldung aufgenommen wird.

Alternativ kann die erste Teillichtverteilung auch durch eine drehbare Blendenwelle erzeugt werden, welche mit zumindest einer Brennlinie zur Erzeugung der ersten Teillichtverteilung versehen ist. Die Drehachse ist dabei über ein Getriebe in unterschiedliche Drehstellungen bringbar und translatorisch im Strahlengang des von der ersten Lichtquelle 7 emittierten Lichts verschiebbar. Die Drehung wird dann über die Aktuatoren 14 und die translatorische Verschiebung über die Aktuatoren 15 ausgeführt. Eine solche Blendewelle ist beispielsweise in der EP 0 935 728 B1 beschrieben.

Figur 3 zeigt auch, dass die Scheinwerfer 1 und 2 von Lichtscheiben 21 abgeschlossen werden. Die Lichtscheiben 21 können ganz oder teilweise als Streuscheibe ausgebildet sein. Bevorzugt sind sie dort, wo sie die ersten Module 3 bedecken als Streuscheibe 21 und dort wo sie die zweiten Module 4 bedecken, als Klarscheibe ausgebildet.

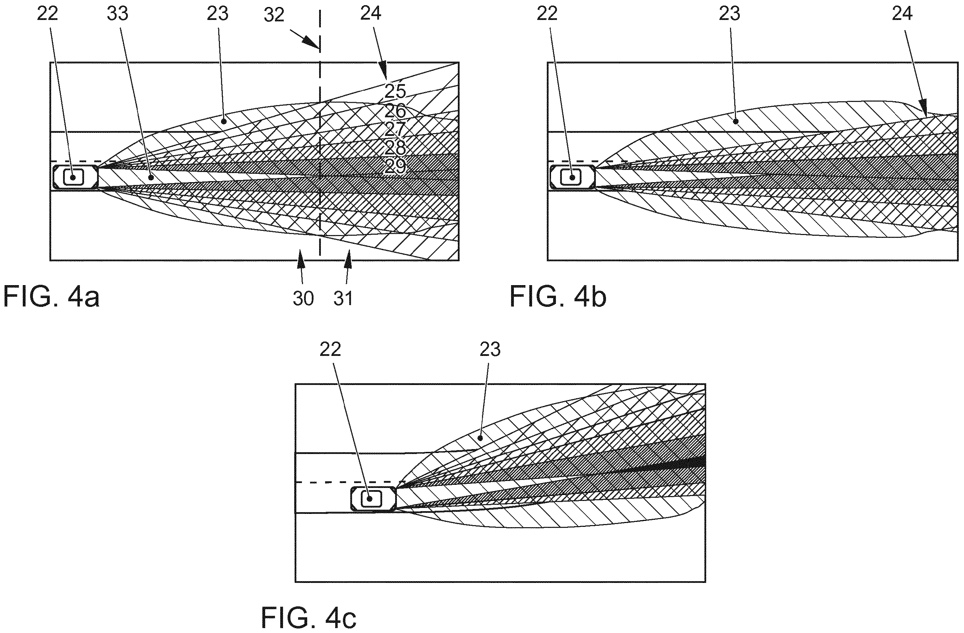

Im Folgenden werden mit Bezug zu den Figuren 4a bis 4c erste und zweite Teillichtverteilungen einer Fernlichtfunktion beschrieben, welche von den Scheinwerfern 1 und 2 der Scheinwerferanordnung generell erzeugt werden können. Dabei befinden sich die Blenden 10 und 11 nicht im Strahlengang des von der Lichtquelle 7 emittierten Lichts und alle Leuchtdioden 13 des zweiten Moduls sind in der Ausgangssituation der Figur 4a eingeschaltet:
Die von der Scheinwerferanordnung erzeugte Gesamtlichtverteilung ist anhand einer Hell-Dunkel-Grenze auf einer Straße gezeigt, wobei sie in zwei Teillichtverteilungen 23 und 24 aufgeteilt ist. Weiterhin wird die Gesamtlichtverteilung des Fernlichts in Abhängigkeit von der Geschwindigkeit des Fahrzeugs geregelt.

Die in Figur 4a gezeigte Gesamtlichtverteilung kann bei einer Geschwindigkeit von beispielsweise v < 90 km/h eingestellt werden. Andere Geschwindigkeitsgrenzen, ab denen die Gesamtlichtverteilung eingestellt wird sind ebenso möglich.

Die Gesamtlichtverteilung setzt sich zusammen aus einer von den ersten Modulen 3 erzeugten ersten Teillichtverteilung 23 und einer von den zweiten Modulen 4 erzeugten zweiten Teillichtverteilung 24.

An der Grenze 32 tritt die zweite Teillichtverteilung 24 über die Hell-Dunkel-Grenze der ersten Teillichtverteilung 23 hinaus. Dadurch wird der Bereich vor dem Fahrzeug 22 in einen fahrzeugnahen 30 und einen fahrzeugfernen Bereich 31 aufgeteilt.

In dem fahrzeugnahen Bereich 30 wird die Hell-Dunkel-Grenze der Gesamtlichtverteilung von der ersten Teillichtverteilung 23 erzeugt. In dem fahrzeugfernen Bereich 31 wird die Hell-Dunkel-Grenze von der zweiten Teillichtverteilung 24 erzeugt.

Da die erste Teillichtverteilung 23 in der Nähe des Fahrzeugs 22 breiter ist als die zweite Teillichtverteilung 24, gewährleistet die erste Teillichtverteilung 23 ein breite Ausleuchtung der befahrenen Fahrbahn im fahrzeugnahen Bereich 30. Die erste Teillichtverteilung 23 leuchtet den fahrzeugfernen Bereich 31 zwar noch aus, wird dort allerdings nicht mehr breiter.
Die zweite Teillichtverteilung 24 erzeugt in dem fahrzeugfernen Bereich 31 eine Hell-Dunkel-Grenze, welche breiter ist, als die Hell-Dunkel-Grenze der ersten Teillichtverteilung 23. Die Breite der Hell-Dunkel-Grenze der zweiten Teillichtverteilung 24 ist dabei von der Breite der mit Leuchtdioden 13 besetzten Fläche abhängig.

Dadurch, dass die zweite Teillichtverteilung 24 eine breitere Hell-Dunkel-Grenze im fahrzeugfernen Bereich 31 aufweist, kann gewährleistet werden, dass der Fahrer des Fahrzeugs 22 Gefahren auf oder neben der Straße bereits aus einer weiten Entfernung erkennen kann. Dadurch können eventuell notwendige Reaktionen früher eingeleitet werden.

Die von dem zweiten Modul 4 des linken Scheinwerfers 1 erzeugte zweite Teillichtverteilung 24 ist ferner in mehrere Teilbereiche 25 bis 29 unterteilt. Dabei wird der Teilbereich 25 von der Reihe 60 von Leuchtdioden 13, der Teilbereich 26 von der Reihe 59 von Leuchtdioden 13, der Teilbereich 27 von der Reihe 58 von Leuchtdioden 13, der Teilbereich 28 von der Reihe 57 von Leuchtdioden 13 und der Teilbereich 29 von den Reihen 56 und 55 von Leuchtdioden 13, erzeugt. Um einen plötzlichen Helligkeitsabfall zwischen der Gesamtlichtverteilung und der nicht ausgeleuchteten Umgebung zu vermeiden, fällt die Helligkeit der Teilbereiche 25 bis 29 von innen nach außen ab. Der äußerste Teilbereich 25 weist demnach die geringste Helligkeit der Teilbereiche 25 bis 29 auf. Dies kann dadurch realisiert werden, dass die für die unterschiedlichen Teilbereiche 25 bis 29 verantwortlichen Reihen von Leuchtdioden 13 unterschiedlich stark gedimmt werden. Es können auch die Reihen von Leuchtdioden 13, welche die Teilbereiche 27 bis 29 erzeugen mit gleicher Leuchtstärke betrieben werden, und lediglich die Reihen von Leuchtdioden 13, welche die Teilbereiche 25 und 26 erzeugen, gedimmt werden.

Die von dem zweiten Modul 4 des rechten Scheinwerfers 2 erzeugte zweite Teillichtverteilung 24 ist ebenso in mehrere Teilbereiche 25 bis 28 unterteilt. Dabei sind die innersten Reihen 55 und 56 von Leuchtdioden 13 nicht eingeschaltet.

Weiterhin weist die erste Teillichtverteilung 23 einen Bereich 33 auf, der von der zweiten Teillichtverteilung 24 nicht ausgeleuchtet wird. Dieser Bereich 33 befindet sich direkt vor dem Fahrzeug 22. Dadurch wird gewährleistet, dass auch dieser Bereich 33 ausreichend ausgeleuchtet ist.

Die Überlagerung der ersten 23 und der zweiten Teillichtverteilung 24 erzeugt ein Fernlicht, welches in dem Bereich, in dem sich die Leuchtstärken beider Lichtverteilungen 23 und 24 addieren, ein helleres Licht bereitstellt, während Bereiche, die bei Verwendung von lediglich einer der beiden Lichtverteilungen 23 oder 24 nicht ausgeleuchtet werden, auch ausgeleuchtet werden. Die Kombination des ersten 3 und des zweiten Moduls 4 führt also insgesamt zu einer helleren Gesamtlichtverteilung mit breiterer Ausleuchtung.

Die in Figur 4b gezeigte Gesamtlichtverteilung stellt eine Fernlichtfunktion bei einer Geschwindigkeit von beispielsweise v ≥ 90 km/h dar.

Dabei sind die erste 23 und die zweite Teillichtverteilung 24 prinzipiell aufgebaut, wie es in Figur 4a gezeigt ist.

Bei höheren Geschwindigkeiten ist eine weitere Leuchtweite und/oder eine in ihrer Gesamtheit fokussiertere Lichtverteilung als bei niedrigeren Geschwindigkeiten in der Regel wünschenswert, um eine Ausleuchtung und einen Fokus in weite Ferne zu gewährleisten. Bei der in Figur 4b gezeigten Gesamtlichtverteilung wird die Leuchtweite hauptsächlich über die zweite Teillichtverteilung 24 geregelt. Die erste Teillichtverteilung 23 ändert sich dabei im Vergleich zur ersten Teillichtverteilung 23, wie in Figur 4a gezeigt, nicht.

Die Reihen 60 und 59 von Leuchtdioden 13, welche die Teilbereiche 25 und 26 der zweiten Teillichtverteilung 24 aus Figur 4a erzeugt haben, werden ausgeschaltet. Dadurch wird der Fokus des Fahrers des Fahrzeugs 22 auf weitere Entfernungen gelenkt.

In Figur 4c ist die Gesamtlichtverteilung bei einer Fahrt um eine Linkskurve gezeigt.

Die Kurve wird erfasst und die erste Teillichtverteilung 23 wird durch Schwenken der ersten Module nach links ebenso nach links geführt.

Die zweite Teillichtverteilung 24 wird dadurch nach links "geschwenkt", dass vermehrt Leuchtdioden des zweiten Moduls 4 des linken Scheinwerfers 2 eingeschaltet sind. Dabei sind die äußeren Reihen 61 und 62 von Leuchtdioden des linken zweiten Moduls 4 eingeschaltet, welche nun die äußersten Teilbereiche 25 und 26 des von dem zweiten Modul 4 des linken Scheinwerfers 1 erzeugten Teils der zweiten Teillichtverteilung 24 erzeugen. Die innersten Reihen 55 und 56 des linken zweiten Moduls 4 sind ausgeschaltet.

Der von dem zweiten Modul 4 des rechten Scheinwerfers 2 erzeugte Teil der zweiten Teillichtverteilung 24 wird insgesamt in seiner Helligkeit und Breite durch Ansteuern entsprechender Reihen von Leuchtdioden 13 reduziert.

In Gesamtheit ergibt sich für den Fahrer der Eindruck, die zweite Teillichtverteilung 24 würde ebenso wie die erste Teillichtverteilung nach links geschwenkt werden.

Beispielhaft ist eine Linkskurve beschrieben. Für eine Rechtskurve ergibt sich eine spiegelverkehrte Ansteuerung der Leuchtdioden 13 der zweiten Module 4 und ein Schwenken nach rechts der ersten Module 3.

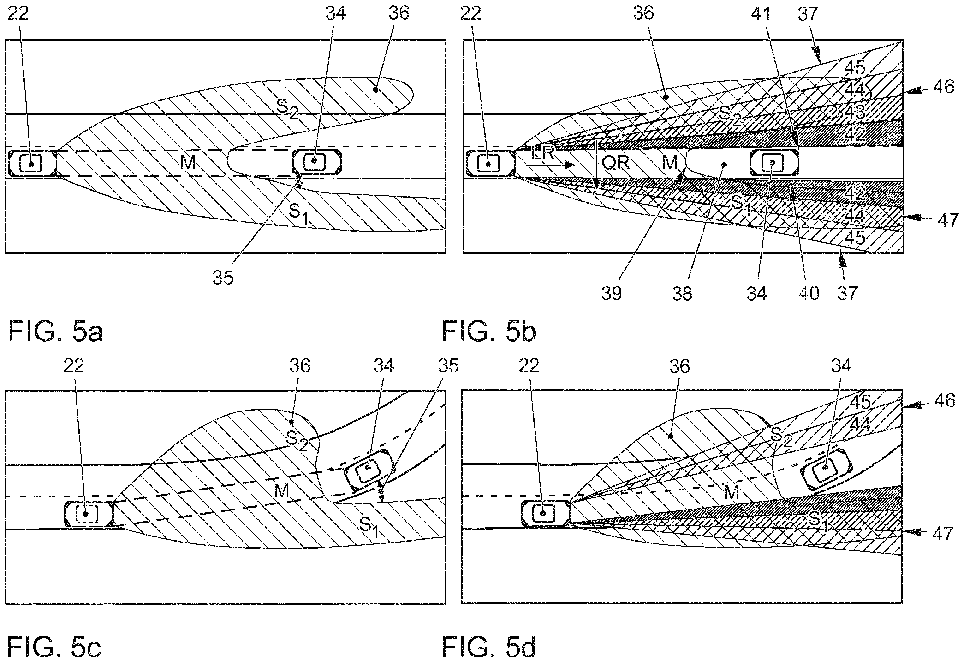

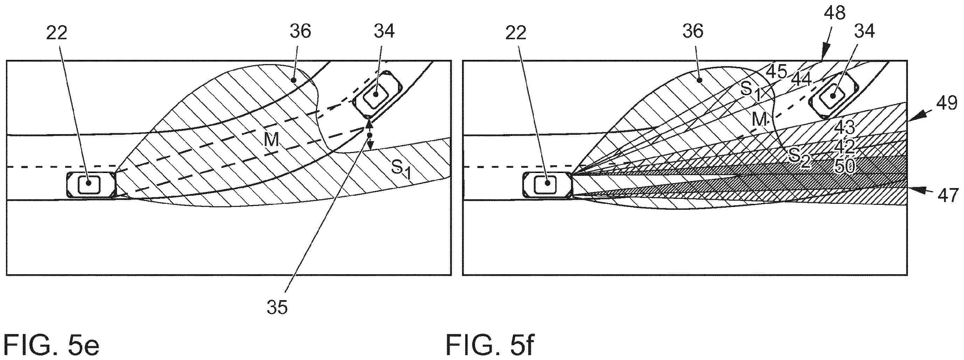

Mit Bezug zu den Figuren 5a, 5c und 5e wird aus Gründen der Übersichtlichkeit das von den ersten Modulen 3 erzeugte maskierte Dauerfernlicht gezeigt. Die Figuren 5b, 5d und 5f zeigen die Überlagerung der ersten Teillichtverteilung 36 und der zweiten Teillichtverteilung 37 zu einer Gesamtlichtverteilung, welche mit dem erfindungsgemäßen Verfahren erzeugt werden kann:
Ausgangspunkt ist dabei eine Gesamtlichtverteilung wie sie in Figur 4a gezeigt ist.

Zunächst wird ein vorausfahrender Verkehrsteilnehmer 34 von der Kamera 18 erfasst. Die Art und Weise, wie der entgegenkommende Verkehrsteilnehmer erfasst wird, ist beispielsweise in der DE 10 2009 054 227 A1 beschrieben, deren diesbezüglicher Inhalt durch Bezugnahme in die vorliegende Anmeldung aufgenommen wird.

Die Blenden 10 und 11 werden dann derart in den Strahlengang des von der Lichtquelle 7 des ersten Moduls 3 emittierten Lichts geschoben, dass auf der Fahrbahn, die in der Figur 5a gezeigte erste Teillichtverteilung 36 entsteht.

Die in Figur 5a gezeigte erste Teillichtverteilung 36 weist im Bereich M eine Leuchtweite auf, die so geregelt wird, dass sie zumindest geringer als der Abstand zu dem erfassten Verkehrsteilnehmer 34 ist.

Auf zumindest einer Seite neben dem Mittelbereich M in Richtung des erfassten Verkehrsteilnehmers 34 ist ein Seitenbereich S₁ gebildet, bei dem die Leuchtweite größer ist als die Leuchtweite im Bereich M der ersten Teillichtverteilung 36. Neben dem Verkehrsteilnehmer 34 wird somit vorbeigeleuchtet, um dem Fahrer des Fahrzeugs 22 eine bessere Ausleuchtung des Verkehrsbereichs vor dem Fahrzeug 22 bereitzustellen. Die Leuchtweite im Seitenbereich S₁ kann beispielsweise der Leuchtweite bei einer herkömmlichen Fernlichtfunktion entsprechen. Auch auf der anderen Seite der Gesamtlichtverteilung wird ein Seitenbereich S₂ gebildet, welcher auch eine größere Leuchtweite besitzt als die Leuchtweite in dem Mittelbereich M. Auch die Leuchtweite des Seitenbereichs S₂ entspricht der Leuchtweite einer herkömmlichen Fernlichtfunktion, so dass die Gesamtlichtverteilung einem herkömmlichen Fernlicht entspricht, bei dem in der Lichtverteilung ein Bereich beim erfassten Verkehrsteilnehmer 34 und in Fahrtrichtung vor dem Verkehrsteilnehmer 22 ausgeschnitten ist.

In Figur 5b ist eine Überlagerung der von den zweiten Modulen 4 erzeugten zweiten Teillichtverteilung 37 mit der ersten Teillichtverteilung 36 gezeigt.

Die zweite Teillichtverteilung 37 weist dabei zwei Teillichtstrahlen 46 und 47 auf, wobei ein Lichtstrahl 46 vom zweiten Modul 4 des linken Scheinwerfers 1 und ein Lichtstrahl 47 vom zweiten Modul 4 des rechten Scheinwerfers 2 erzeugt wird. Der linke Lichtstrahl 46 strahlt dabei links und der rechte Lichtstrahl 47 rechts an dem erfassten Verkehrsteilnehmer 34 vorbei. Die Helligkeiten der ersten Teillichtverteilung 36 und der zweiten Teillichtverteilung 37 addieren sich dabei in den zwei Seitenbereichen S₁ und S₂, während in dem Mittelbereich M nur die erste Teillichtverteilung 36 eine Ausleuchtung bereitstellt.

Weiterhin ist der linke Lichtstrahl 46 der zweiten Teillichtverteilung 37 in Teilbereiche 42 bis 45 unterteilt. Dabei wird der Teilbereich 42 von den Reihen 58 und 59 und die Teilbereiche 43 bis 45 entsprechend von den Reihen 60 bis 62 von Leuchtdioden 13 des linken zweiten Moduls 4 erzeugt.

Der rechte Lichtstrahl 47 ist in die Teilbereiche 42, 44 und 45 unterteilt. Gleiche Bezugszeichen für die Teilbereiche des linken 46 und rechten Lichtstrahls 47 bedeutet dabei gleiche Helligkeiten. Der Teilbereich 42 wird dabei von den Reihen 59 und 60 und die Teilbereiche 44 und 45 entsprechend von den Reihen 61 und 62 von Leuchtdioden 13 des rechten zweiten Moduls 4 erzeugt.

Die inneren Reihen 55 bis 57 von Leuchtdioden 13 des linken zweiten 4 und die inneren Reihen 55 bis 58 von Leuchtdioden 13 des rechten zweiten Moduls 4 werden ausgeschaltet.

Der Mittelbereich M erzeugt eine Kante 39, deren Abstand von der Scheinwerferanordnung durch die Leuchtweite und die Position der Blenden 10 und 11 im Strahlengang des von der Lichtquelle 7 des ersten Moduls 3 emittierten Lichts abhängt. Weiterhin erzeugen die Seitenbereiche S₁ und S₂, welche von der zweiten Teillichtverteilung 37 erzeugt werden, in Längsrichtung LR zum Fahrzeug 22 ebenso zwei Kanten 40 und 41, deren Abstand zueinander in Querrichtung QR zum Fahrzeug 22 von der Breite des erfassten Fahrzeugs 34 abhängt. Durch die Kanten 39, 40 und 41 wird ein lichtfreier Korridor 38 gebildet, in dem sich das erfasste Fahrzeug 34 befindet.

Im Vergleich zur alleinigen ersten Teillichtverteilung 36 aus Figur 5a, welches im Allgemeinen der Gesamtlichtverteilung des im Stand der Technik beschriebenen maskierten Dauerfernlichts entspricht, wird ersichtlich, dass die aus der ersten 36 und der zweiten Teillichtverteilung 37 bestehende Gesamtlichtverteilung aus Figur 5b durch Addition der Helligkeiten beider Teillichtverteilungen 36 und 37 nicht nur heller ist, sondern auch durch die zweite Teillichtverteilung 37 eine weiterreichende Leuchtweite aufweist und der lichtfreie Korridor 38 sehr eng an den erfassten Verkehrsteilnehmer 34 herangeführt werden kann.

Die aus den beiden Teillichtverteilungen 36 und 37 bestehende Gesamtlichtverteilung weist somit insgesamt ein größeres und weiteres Leuchtfeld und in manchen Bereichen eine höhere Helligkeit auf, ohne den vorausfahrenden Verkehrsteilnehmer 34 zu blenden. Durch das Abfallen der Helligkeiten der Leuchtdioden 13 von innen nach außen kann außerdem eine weicher Übergang zwischen Leuchtfeld und Nicht-Leuchtfeld geschaffen werden.

In Figur 5c ist die erste Teillichtverteilung 36 bei einer Fahrt durch eine Linkskurve gezeigt. Dabei wird deutlich, dass die Leuchtweite des Seitenbereichs S₂ soweit abgesenkt ist, dass sie mit der Leuchtweite des Mittelbereichs M im Wesentlichen übereinstimmt. Dies ist dadurch bedingt, dass die Blenden 10 und 11 in den Strahlengang des von der Lichtquelle 7 des linken ersten Moduls 3 emittierten Lichts derart verschoben werden müssen, dass der lichtfreie Korridor 38 dem erfassten Verkehrsteilnehmer 34 nachgeführt werden kann. Das Verschieben führt ab einer bestimmten Position der Blenden 10 und 11 dazu, dass Licht, welches den Seitenbereich S₂ in der ersten Lichtverteilung 36 erzeugen würde, abgeschattet wird. Der Seitenbereich S₂ kann von der ersten Teillichtverteilung nicht mehr ausgebildet werden, wodurch dieser Seitenbereich S₂ gänzlich unbeleuchtet bleibt.

Auf der rechten Seite ist der Abstand 35 zwischen dem erfassten Fahrzeug 34 und dem Seitenbereich S₁ im Vergleich zu Figur 5a gewachsen.

Wird der ersten Teillichtverteilung 36 jedoch die zweite Teillichtverteilung 37 in dieser Situation überlagert, wie in Figur 5d gezeigt, ist eine weitere Ausleuchtung des Seitenbereichs S₂ möglich.

Die zweite Teillichtverteilung 37 ist im Allgemeinen so aufgebaut wie in Figur 5b. Um zu verhindern, dass der vorausfahrende Verkehrsteilnehmer 34 geblendet wird, werden die Reihen 55 und 56 von Leuchtdioden 13, die in Figur 5b die inneren Teilbereiche 42 und 43 des Lichtstrahls 46 erzeugt haben, abgeschaltet, so dass der linke Lichtstrahl 46 nun eine geringere Breite aufweist und nur noch von den Reihen 57, 58 und 59, wobei die Reihen 58 und 59 Licht der gleichen Leuchtstärke emittieren, erzeugt wird. Der rechte Lichtstrahl 47 bleibt unverändert.

Durch Überlagern der ersten 36 und zweiten Teillichtverteilung 37 kann im Vergleich zur alleinigen ersten Teillichtverteilung 36 aus Figur 5c eine Beleuchtung des Seitenbereichs S₂ auch dann gewährleistet werden, wenn das erste Modul 3 aufgrund technischer Gegebenheiten und optischer Eigenschaften an seine Grenzen stößt.

Auch der Abstand 35 zwischen Seitenbereich S₁ und erfasstem Verkehrsteilnehmer 34 kann auf diese Weise drastisch reduziert werden, so dass der lichtfreie Korridor 38 bis an den erfassten Verkehrsteilnehmer 34 heranreicht.

In Figur 5e ist die erste Teillichtverteilung 36 bei Fahrt durch eine enge Kurve gezeigt. Sie unterscheidet sich nicht mehr von der ersten Teillichtverteilung 36 bei einer normalen Kurve, wie in Figur 5c gezeigt. Dabei ist der Abstand 35 zwischen dem erfassten Verkehrsteilnehmer 34 und dem Seitenbereich S₁ noch größer als in Figur 5b.

Figur 5f ist wiederum eine Gesamtlichtverteilung gezeigt, welche durch das übereinander Lagern der ersten 36 und der zweiten Teillichtverteilung 37 erzeugt wird.

Bei der zweiten Teillichtverteilung 37 werden die Leuchtdioden 13 des zweiten Moduls 4 des linken Scheinwerfers 2 so angesteuert, dass der linke Lichtstrahl 46 in zwei Teillichtstrahlen 48 und 49 aufgeteilt wird. Dies geschieht dadurch, dass die Reihen 58 und 59 von Leuchtdioden 13, welche ursprünglich die Unterbereiche 42 und 43 des linken Lichtstrahls 46 erzeugt haben, ausgeschaltet werden. Dafür werden die Unterbereiche 42 und 43 von den Reihen 56 und 57 von Leuchtdioden 13 erzeugt. Zusätzlich wird auch die innerste Reihe 55 von Leuchtdioden 13 angeschaltet, so dass ein zusätzlicher Teilbereich 50 erzeugt wird. Dadurch strahlt der Teillichtstrahl 49 rechts an dem vorausfahrenden Verkehrsteilnehmer 34 vorbei, und nicht mehr wie ursprünglich links an dem vorausfahrenden Verkehrsteilnehmer 34 vorbei. Dadurch werden der rechte Lichtstrahl 47 und der Teillichtstrahl 49 des linken Lichtstrahls 46 überlagert und sorgen so für eine hellere Ausleuchtung im Bereich rechts neben dem vorausfahrenden Verkehrsteilnehmer 34.

Auch der Abstand 35 zwischen Seitenbereich S₁ und erfasstem Verkehrsteilnehmer 34 kann auf diese Weise drastisch reduziert werden.

Die Teilbereiche 45 und 44 werden unverändert von den gleichen Reihen 61 und 62 von Leuchtdioden 13 erzeugt, wie in Figur 5d gezeigt. Dadurch wird der zweite Teillichtstrahl 48 links an dem vorausfahrenden Fahrzeug vorbeigeführt.

In den Figuren 5c, 5d, 5e und 5f ist beispielhaft eine Fahrt durch eine Linkskurve gezeigt. Bei einer Fahrt durch eine Rechtskurve werden die erste 36 und die zweite Teillichtverteilung 37 auf die gleiche Weise nur durch gespiegelte Ansteuerung des ersten 3 und zweiten Moduls 4 erzeugt.

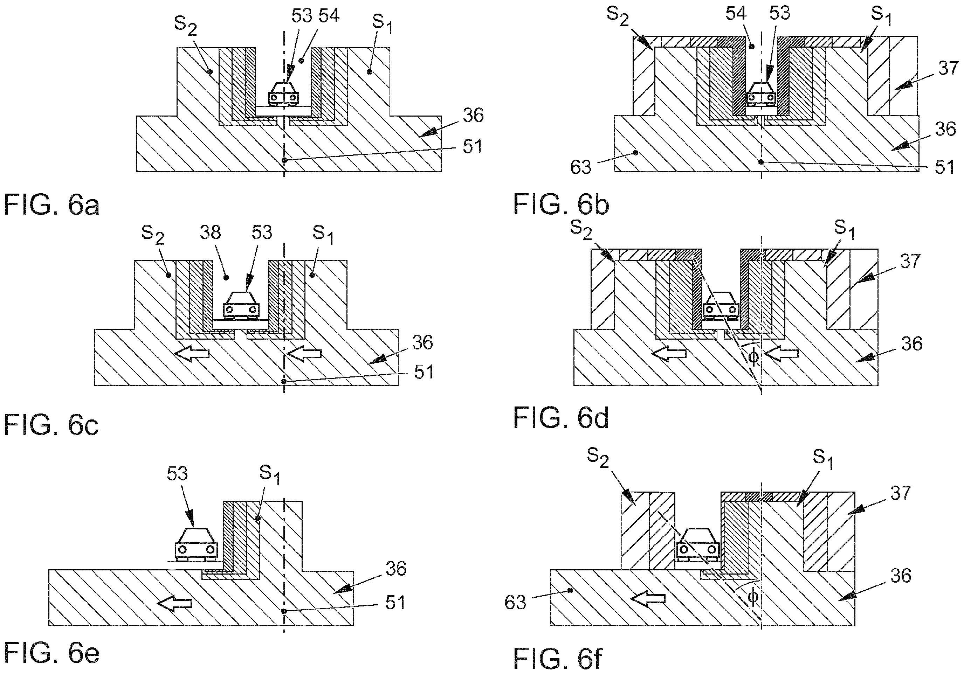

Mit Bezug zu den Figuren 6a bis 6f wird in gleicher Weise wie bei den Figuren 5a bis 5f zunächst die erste Teillichtverteilung 36 alleine bei einer Verkehrssituation mit einem entgegenkommenden Fahrzeug erläutert. Dabei wird ein perspektivische Ansicht zur Verdeutlichung des Zustandekommens der Teillichtverteilungen 36 und 37 durch verschiedene Stellungen der ersten 3 und zweiten Module 4 gezeigt. Weiterhin sind die Teillichtverteilungen 36 und 37 schematisch so gezeigt, wie sie auf einem Bildschirm, der in einem bestimmten Abstand vor das Fahrzeug 22 gestellt ist, zu sehen sind. Wie in den Figuren 4a bis 4c und 5b, 5d und 5f zu sehen, sind die Leuchtweiten der zweiten Teillichtverteilung 37 jedoch in der Regel weiter als die Leuchtweiten der ersten Teillichtverteilung 36. Um dies in den Figuren 6b, 6d und 6f darzustellen, ist die zweite Teillichtverteilung 37 durch eine geringere Liniendichte bei der Schraffur dargestellt.

Prinzipiell werden die Teillichtverteilungen 36 und 37 bei einem entgegenkommenden Verkehrsteilnehmer 53 wie bei dem vorausfahrenden Verkehrsteilnehmer 34 bei einer Kurvenfahrt geregelt.

Ausgangspunkt des erfindungsgemäßen Verfahrens ist wiederum eine Gesamtlichtverteilung der Fernlichtfunktion, wie sie in Figur 4a gezeigt ist.

Zunächst wird ein entgegenkommender Verkehrsteilnehmer 53 von der Kamera 18 erfasst.

Dann werden die Blenden 10 und 11 in den Strahlengang des von der Lichtquelle 7 des ersten Moduls 3 emittierten Lichts derart eingebracht, dass sich in der Lichtverteilung eine Aussparung 54, wie sie in Figur 6a gezeigt ist, bildet. Die Aussparung 54 ist dort platziert, wo sich der entgegenkommende Verkehrsteilnehmer 53 befindet. Auf der Fahrbahn führt dies zur Ausbildung des Mittelbereichs M und der beiden Seitenbereiche S₁ und S₂.

Gleichzeitig werden die Leuchtdioden 13 des zweiten Moduls 4 von der Steuervorrichtung 14 so angesteuert, dass die Reihen 55 und 56 von Leuchtdioden 13, die an innerster Stelle in den zweiten Modulen 4 angeordnet sind, ausgeschaltet werden. Allgemein hängt die Anzahl der Reihen, die ausgeschaltet wird, von der Breite und Entfernung des entgegenkommenden Verkehrsteilnehmer 53 ab. Dadurch wird an gleicher Stelle wie in der ersten Teillichtverteilung eine Aussparung in der zweiten Teillichtverteilung erzeugt.

Die überlagerten Teillichtverteilung 36 und 37 sind in Figur 6b gezeigt. Daraus wird insbesondere deutlich, dass die zweite Teillichtverteilung 37 auch in den Außen- und Innenbereichen, in denen die erste Teillichtverteilung 36 keine Ausleuchtung bietet, eine Ausleuchtung bereitstellt, während die erste Teillichtverteilung 36, dort beleuchtet, wo die zweite Teillichtverteilung 37 nicht beleuchtet. Die zweite Teillichtverteilung 37 stellt insbesondere im Vorfeld 63 des Fahrzeugs 22 keine Ausleuchtung bereit.

Durch die Aussparung 54 in der Gesamtlichtverteilung wird auf der Fahrbahn der lichtfreie Korridor 38 erzeugt, in dem sich das entgegenkommende Fahrzeug 53 bewegt.

Da sich beide Fahrzeuge 22 und 53 aufeinander zu bewegen, verringert sich der Abstand des Fahrzeugs 22 zu dem entgegenkommenden Verkehrsteilnehmer 53. Ab einem bestimmten Abstand bildet sich zwischen der Fahrtrichtung 51 des Fahrzeugs 22 und der Verbindungslinie 52 von dem Fahrzeug 22 zu dem entgegenkommenden Fahrzeug 53 ein Winkel Φ, welcher mit kleiner werdendem Abstand zunimmt.

Würde die Gesamtlichtverteilung bei einem näher kommenden Fahrzeug beibehalten werden, würde dies zu einem Blenden des entgegenkommenden Verkehrsteilnehmers 53 führen.

In Abhängigkeit von dem Winkel Φ wird also die Aussparung, welche in der Gesamtlichtverteilung vorhanden ist, nach links verschoben.

In Figur 6c ist ein Anpassen der Aussparung 54 an den entgegenkommenden Verkehrsteilnehmer in der ersten Teillichtverteilung 36 gezeigt. Um dies zu erreichen werden die Blenden 10 und 11 der ersten Module 3 vertikal nach links und horizontal nach unten verschoben. Dadurch ergibt sich eine nach links und dem Abstand des entgegenkommenden Fahrzeugs 53 angepasste versetzte Aussparung in der ersten Teillichtverteilung 36. Alternativ kann auch lediglich die Blende 10 vertikal nach links verschoben werden, während zur Anpassung der Leuchtweite gleichzeitig das erste Modul 3 um eine horizontale Achse verschwenkt wird.

Weist die Scheinwerferanordnung eine drehbare Blendenwelle auf, so wird diese solange gedreht, bis die Brennlinie derart im Strahlengang positioniert ist, dass der entgegenkommende Verkehrsteilnehmer 53 aus der ersten Teillichtverteilung 36 ausgespart wird. Ist ein Drehen der Blendenwelle nicht ausreichend, um dies zu erreichen, wird zusätzlich die Blendenwelle durch eine translatorische Bewegung im Strahlengang verschoben.
Figur 6d zeigt die überlagerte erste 36 und zweite Teillichtverteilungen 37. Die zweiten Module 4 werden derart angesteuert, dass die Leuchtdioden 13, die bisher ausgeschaltet waren, um die Aussparung in der zweiten Teillichtverteilung 37 zu erzeugen, zumindest teilweise eingeschaltet werden, während andere Leuchtdioden 13, die bisher eingeschaltet waren, um den Seitenbereich S₂ zu erzeugen, zumindest teilweise ausgeschaltet werden. Dabei werden die Leuchtdioden 13 so ein- bzw. ausgeschaltet, dass sich eine neue, nach links versetzte Aussparung 54 in der zweiten Teillichtverteilung 37 bildet.

In der Gesamtlichtverteilung entsteht demnach ein der Position des entgegenkommenden Verkehrsteilnehmers 53 nachgeführter lichtfreier Korridor 38.

Durch oben bereits erläuterte technische Einschränkungen des ersten Moduls 3 muss ab einem bestimmten Winkel Φ die Leuchtweite der ersten Teillichtverteilung im Seitenbereich S₂ derart abgesenkt werden, dass sie mit der Leuchtweite der ersten Teillichtverteilung im Mittelbereich M übereinstimmt. Dies ist Figur 6e gezeigt. Dies geschieht dann, wenn eine maximale Verschiebeposition der Blenden 10 und 11 des linken ersten Moduls 3 erreicht ist.

Aus Figur 6c wird ersichtlich, dass ab einem bestimmten Winkel Φ in dem Seitenbereich S₂ die erste Teillichtverteilung 36 nicht mehr zur Gesamtlichtverteilung beiträgt.

Nur noch die zweite Teillichtverteilung 37 erzeugt dann aufgrund der Ansteuerung der äußersten Leuchtdioden 13 in dem zweiten Modul 4 die Gesamtlichtverteilung im Seitenbereich S₂.

Um zu gewährleisten, dass der entgegenkommende Verkehrsteilnehmer 53, ohne geblendet zu werden, das Fahrzeug 22 passieren kann, müssen dann die Leuchtdioden 13, welche die alleinige Ausleuchtung des Seitenbereichs S₂ bereitstellen, abgestellt werden.

Das gleiche Verfahren ist im Allgemeinen auch für die in den Figuren 5b, 5d und 5f erzeugten Gesamtlichtverteilungen bei einem vorausfahrenden Verkehrsteilnehmer möglich.

Es können auch mehr als ein Verkehrsteilnehmer erfasst und aus der Lichtverteilung ausmaskiert werden. Beispielsweise kann ein vorausfahrender 34 und gleichzeitig ein entgegenkommender 53 Verkehrsteilnehmer erfasst werden. Die resultierenden ersten und zweiten Teillichtverteilungen sind dann Kombinationen der ersten und zweiten Teillichtverteilungen aus den Figuren 5b, d und f sowie 6b, d und f.

Ferner ist es möglich die Leuchtweite im Seitenbereich S₂ der ersten Lichtverteilung kontinuierlich zu verringern. Dies geschieht insbesondere in Abhängigkeit von dem horizontalen Winkels Φ. Eine detaillierte Leuchtweitenregelung in Abhängigkeit von dem horizontalen Winkel Φ für die erste Teillichtverteilung 36 ist beispielsweise in der DE 10 2009 054 227 A1 beschrieben, deren diesbezüglicher Inhalt durch Bezugnahme in die vorliegende Anmeldung aufgenommen wird.

Mit der erfindungsgemäßen Scheinwerferanordnung sind auch andere Lichtfunktionen erzeugbar. Beispielsweise kann auch eine Abblendlichtfunktion bereitgestellt werden.

### Bezugszeichenliste

- 1: rechter Scheinwerfer
- 2: linker Scheinwerfer
- 3: erstes Modul
- 4: zweites Modul
- 5, 6: weitere Modul
- 7: Lichtquelle des ersten Moduls
- 8: Reflektor des ersten Moduls
- 9: Projektionslinse
- 10, 11: Blenden
- 12: Gehäuse erste Modul
- 13: Lichtquellen des zweiten Moduls
- 14: Steuervorrichtung
- 15, 16, 17: Aktuatoren
- 18: Kamera
- 19: Steuervorrichtung
- 20: Fahrzeugbus
- 21: Lichtscheibe
- 22: Fahrzeug
- 23: erste Teillichtverteilung
- 24: zweite Teillichtverteilung
- 25-29: Teilbereiche der zweiten Teillichtverteilung
- 30: fahrzeugnaher Bereich
- 31: fahrzeugferner Bereich
- 32: Grenze zwischen fahrzeugnahem und fahrzeugfernem Bereich
- 33: Bereich vor Fahrzeug
- 34: vorausfahrender Verkehrsteilnehmer
- 35: Gesamtlichtverteilung des bekannten maskierten Dauerfernlichts
- 36: erste Teillichtverteilung
- 37: zweite Teillichtverteilung
- 38: lichtfreier Korridor
- 39: Kante des Mittelbereichs
- 40, 41: Kanten der Seitenbereiche
- 42-45: Teilbereiche der zweiten Teillichtverteilung
- 46: linker Lichtstrahl
- 47: rechter Lichtstrahl
- 48: erster Teillichtstrahl
- 49: zweiter Teillichtstrahl
- 50: weiterer Teilbereich der zweiten Teillichtverteilung
- 51: Fahrtrichtung des Fahrzeugs
- 52: Verbindungslinie zwischen Fahrzeug und anderem Verkehrsteilnehmer
- 53: entgegenkommender Verkehrsteilnehmer
- 54: Aussparung
- 55-62: Reihen von Leuchtdioden
- 63: Vorfeld des Fahrzeugs
- M: Mittelbereich
- S₁, S₂: Seitenbereich der Lichtverteilung
- QA: Fahrzeugquerachse
- QR: Querrichtung zum Fahrzeug
- LR: Längsrichtung des Fahrzeugs
- L: Lichtabstrahlrichtung
- Φ: horizontaler Winkel
- V: Vertikale bezüglich des Fahrzeugs

## Patentansprüche

1. Verfahren zum Steuern einer Scheinwerferanordnung für ein Fahrzeug (22) mit zumindest zwei beabstandeten Scheinwerfern (1, 2), mittels welcher eine Gesamtlichtverteilung erzeugbar ist, wobei jeder der beiden Scheinwerfer (1, 2) zumindest ein erstes (3) und ein zweites Modul (4) umfasst, welche separat voneinander angeordnet sind, wobei das erste Modul (3) jeweils zumindest eine Lichtquelle (7) und zumindest ein bewegbares Element (10, 11), welches in den Strahlengang des von der Lichtquelle (7) emittierten Lichts bringbar ist, umfasst und das zweite Modul (4) jeweils eine Vielzahl von in einer Matrix angeordneten Lichtquellen (13) umfasst, bei dem
- eine erste Teillichtverteilung (23, 36) einer Lichtfunktion von den ersten Modulen (3) durch Verändern einer Position des zumindest einen bewegbaren Elementes (10, 11) erzeugt wird,
- eine zweite Teillichtverteilung (24, 37) der gleichen Lichtfunktion von den zweiten Modulen (4) durch Ansteuern einzelner Lichtquellen (13) oder Gruppen von Lichtquellen (13) der Vielzahl von Lichtquellen (13) erzeugt wird, und
- die Gesamtlichtverteilung der Lichtfunktion dadurch erzeugt wird, dass die erste Teillichtverteilung (23, 36) und die zweite Teillichtverteilung (24, 37) überlagert werden,
**dadurch gekennzeichnet, dass**
- zumindest ein Verkehrsteilnehmer (34, 53) in Richtung der Lichtemission der Scheinwerferanordnung erfasst wird,
- die erste Teillichtverteilung (36) einen Mittelbereich (M) mit einer Leuchtweite aufweist, die geringer als der Abstand zu dem erfassten Verkehrsteilnehmer (34, 53) ist, und zwei Seitenbereiche (S₁, S₂), welche beidseitig neben dem Mittelbereich (M) erzeugt werden, und Leuchtweite aufweisen, die größer als die Leuchtweite in dem Mittelbereich (M) sind, und
- die zweite Teillichtverteilung (37) nur in den Seitenbereichen (S₁, S₂) der ersten Teillichtverteilung (36) Leuchtweiten aufweist, die größer als der Abstand zu dem erfassten Verkehrsteilnehmer (34, 53) sind.

2. Verfahren nach Anspruch 1,
**dadurch gekennzeichnet, dass** die zweite Teillichtverteilung (24, 37) an einer Grenze (32) über die Hell-Dunkel-Grenze der ersten Teillichtverteilung (23, 36) hinaustritt und dadurch der Bereich vor dem Fahrzeug (22) in einen fahrzeugnahen (30) und einen fahrzeugfernen Bereich (31) aufgeteilt wird, wobei die Hell-Dunkel-Grenze der Gesamtlichtverteilung in dem fahrzeugnahen Bereich (30) von der ersten Teillichtverteilung (23, 36) und in dem fahrzeugfernen Bereich (31) von der zweiten Teillichtverteilung (24, 37) erzeugt wird.

3. Verfahren nach Anspruch 1 oder 2,
**dadurch gekennzeichnet, dass**
durch den Mittelbereich (M) und die Seitenbereiche (S₁, S₂) in der Gesamtlichtverteilung ein lichtfreier Korridor (38) gebildet wird, welcher eine von dem Mittelbereich (M) in Querrichtung (QR) zum Fahrzeug (22) erzeugte Kante (39) und zwei von den Seitenbereichen (S₁, S₂) in Längsrichtung (LR) zum Fahrzeug (22) erzeugte Kanten (40, 41) aufweist, wobei die von den Seitenbereichen (S₁, S₂) erzeugten Kanten (40, 41) im Wesentlichen von der zweiten Teillichtverteilung (37) erzeugt werden und der Abstand in Querrichtung (QR) zwischen den von den Seitenbereichen (S₁, S₂) erzeugten Kanten (40, 41) von der Breite des erfassten Verkehrsteilnehmers (40, 41) abhängt.

4. Verfahren nach einem der Ansprüche 1 bis 3,
**dadurch gekennzeichnet, dass**
in Abhängigkeit von dem horizontalen Winkel (Φ) zwischen der Fahrtrichtung (51) des Fahrzeugs (22) und der Verbindungslinie (52) von dem Fahrzeug (22) zu dem erfassten Verkehrsteilnehmer (34, 53) die Leuchtweite der ersten Teillichtverteilung (36) in zumindest einem Seitenbereich (S₁, S₂) derart abgesenkt wird, dass ab einem bestimmten Winkel (Φ) der Seitenbereich (S₁, S₂) nur von der zweiten Teillichtverteilung (37) erzeugt wird.

5. Verfahren nach Anspruch 4,
**dadurch gekennzeichnet, dass**
die zweite Teillichtverteilung (37) von zumindest zwei Lichtstrahlen (46, 47) erzeugt wird, wobei zumindest einer dieser beiden Lichtstrahlen (46) in Abhängigkeit von dem horizontalen Winkel (Φ) zwischen der Fahrtrichtung des Fahrzeugs (22) und der Verbindungslinie von dem Fahrzeug (22) zu dem erfassten Verkehrsteilnehmer (34, 53) in zwei Teillichtstrahlen (48, 49) unterteilt wird, so dass ein Teillichtstrahl (48) den einen Seitenbereich (S₂) alleine erzeugt und der andere Teillichtstrahl (49) den anderen Seitenbereich (S₁) gemeinsam zumindest mit dem anderen Lichtstrahl (47) der zweiten Teillichtverteilung (37) erzeugt.

6. Verfahren nach einem der Ansprüche 1 bis 5,
**dadurch gekennzeichnet, dass**
die zweite Teillichtverteilung (37) in den Seitenbereichen (S₁, S₂) in mehrere Teilbereiche (42, 43, 44, 45, 50) aufgeteilt wird, wobei die Leuchtstärke vom innersten Teilbereich (42, 50) zum äußersten Teilbereich (45) abfällt.

7. Verfahren nach einem der Ansprüche 1 bis 6,
**dadurch gekennzeichnet, dass**
die Lichtfunktion eine Fernlichtfunktion ist.

8. Scheinwerferanordnung für ein Fahrzeug (22) mit
- zumindest zwei beabstandeten Scheinwerfern (1, 2), mittels welchen eine Gesamtlichtverteilung erzeugbar ist, wobei jeder der beiden Scheinwerfer (1, 2) zumindest ein erstes (3) und ein zweites Modul (4) umfasst, welche separat voneinander angeordnet sind, wobei das erstes Modul (3) jeweils zumindest eine Lichtquelle (7) und zumindest ein bewegbares Element (10, 11), welches in den Strahlengang des von der Lichtquelle (7) emittierten Lichts bringbar ist, umfasst und das zweite Modul (4) jeweils eine Vielzahl von in einer Matrix angeordneten Lichtquellen (13) umfasst, und
- einer Steuervorrichtung (14), mit welcher die ersten Module (3) so ansteuerbar sind, dass durch Verändern einer Position des zumindest einen bewegbaren Elementes (10, 11) eine erste Teillichtverteilung (23, 36) einer Lichtfunktion erzeugbar ist, und mit welcher die zweiten Module (4) so ansteuerbar sind, dass durch Ansteuern einzelner Lichtquellen (13) oder Gruppen von Lichtquellen (13) der Vielzahl von Lichtquellen (13) eine zweite Teillichtverteilung (24, 37) der gleichen Lichtfunktion erzeugbar ist, und mit welcher die Scheinwerfer (1, 2) so ansteuerbar sind, dass durch Überlagern der ersten (23, 36) und der zweiten Teillichtverteilungen (24, 37) die Gesamtlichtverteilung erzeugbar ist,
- mit einer mit der Steuervorrichtung gekoppelten Einrichtung zum Erfassen von Verkehrsteilnehmern in Fahrtrichtung vor dem Fahrzeug,
**dadurch gekennzeichnet, dass**
- bei Erfassung eines Verkehrsteilnehmers (34, 53) in Richtung der Lichtemission der Scheinwerferanordnung
- die erste Teillichtverteilung (36) einen Mittelbereich (M) mit einer Leuchtweite aufweist, die geringer als der Abstand zu dem erfassten Verkehrsteilnehmer (34, 53) ist, und zwei Seitenbereiche (S₁, S₂), welche beidseitig neben dem Mittelbereich (M) erzeugbar und Leuchtweite aufweisen, die größer als die Leuchtweite in dem Mittelbereich (M) sind, und
- die zweite Teillichtverteilung (37) nur in den Seitenbereichen (S₁, S₂) der ersten Teillichtverteilung (36) Leuchtweiten aufweist, die größer als der Abstand zu dem erfassten Verkehrsteilnehmer (34, 53) sind.

9. Scheinwerferanordnung nach Anspruch 8,
**dadurch gekennzeichnet, dass**
die zumindest eine Lichtquelle (7) des ersten Modul (3) und/oder die Vielzahl von Lichtquellen (13) des zweiten Moduls (4) Leuchtdioden sind und das bewegbare Element des ersten Moduls zumindest eine in ihrer Position veränderbare Blende (10, 11) umfasst.

## Claims

1. Method for controlling headlamp arrangement for a vehicle (22) having at least two spaced apart headlamps (1, 2), by means of which an overall light distribution is producible, wherein each of the two headlamps (1, 2) comprises at least a first (3) and a second module (4), which are arranged separately from one another, wherein the first module (3) in each case comprises at least one light source (7) and at least one movable element (10, 11) which can be brought into the beam path of the light emitted by the light source (7) and the second module (4) in each case comprises a multiplicity of light sources (13) arranged in a matrix, wherein
- a first partial light distribution (23, 36) of light function is produced by the first modules (3) by modifying position of the at least one movable element (10, 11),
- a second partial light distribution (24, 37) of the same light function is produced by the second modules (4) by actuating individual light sources (13) or groups of light sources (13) of the multiplicity of light sources (13), and
- the overall light distribution of the light function is produced by virtue of the first partial light distribution (23, 36) and the second partial light distribution (24, 37) being overlaid,
**characterized in that**
- at least one road user (34, 53) is captured in the direction of the light emission of the headlamp arrangement,
- the first partial light distribution (36) has a central region (M) with a headlight range that is less than the distance to the captured road user (34, 53) and two side regions (S₁, S₂) that are produced on both sides next to the central region (M) and that have headlight ranges that are greater than the headlight range in the central region (M), and
- the second partial light distribution (37) has headlight ranges only in the side regions (S₁, S₂) of the first partial light distribution (36) that are greater than the distance to the captured road user (34, 53).

2. Method according to Claim 1,
**characterized in that** the second partial light distribution (24, 37) extends beyond the light/dark boundary of the first partial light distribution (23, 36) at a boundary (32) and, as a result thereof, the region in front of the vehicle (22) is subdivided into a vehicle-near (30) and a vehicle-distant region (31), wherein the light/dark boundary of the overall light distribution is produced by the first partial light distribution (23, 36) in the vehicle-near region (30) and produced by the second partial light distribution (24, 37) in the vehicle-distant region (31).

3. Method according to Claim 1 or 2,
**characterized in that**
a light-free corridor (38) is formed in the overall light distribution by the central region (M) and the side regions (S₁, S₂), said light-free corridor having an edge (39) produced by the central region (M) in the transverse direction (QR) to the vehicle (22) and two edges (40, 41) produced by the side regions (S₁, S₂) in the longitudinal direction (LR) to the vehicle (22), wherein the edges (40, 41) produced by the side regions (S₁, S₂) are produced substantially by the second partial light distribution (37) and the distance in the transverse direction (QR) between the edges (40, 41) produced by the side regions (S₁, S₂) depends on the width of the captured road user (40, 41).

4. Method according to any one of Claims 1 to 3,
**characterized in that**,
depending on the horizontal angle (Φ) between the direction of travel (51) of the vehicle (22) and the connecting line (52) from the vehicle (22) to the captured road user (34, 53), the headlight range of the first partial light distribution (36) is lowered in at least one side region (S₁, S₂) in such a way that the side region (S₁, S₂) is only produced by the second partial light distribution (37) above a certain angle (Φ).

5. Method according to Claim 4,
**characterized in that**
the second partial light distribution (37) is produced by at least two light beams (46, 47), wherein at least one of these two light beams (46) is subdivided into two partial light beams (48, 49) depending on the horizontal angle (Φ) between the direction of travel of the vehicle (22) and the connecting line from the vehicle (22) to the captured road user (34, 53) such that a partial light beam (48) produces the one side region (S₂) on its own and the other partial light beam (49) produces the other side region (S₁) at least together with the other light beam (47) of the second partial light distribution (37).

6. Method according to any one of Claims 1 to 5,
**characterized in that**
the second partial light distribution (37) in the side regions (S₁, S₂) is subdivided into a plurality of portions (42, 43, 44, 45, 50), wherein the luminosity drops from the innermost portion (42, 50) to the outermost portion (45).

7. Method according to any one of Claims 1 to 6,
**characterized in that**
the light function is a full-beam function.

8. Headlamp arrangement for a vehicle (22), comprising
- at least two spaced apart headlamps (1, 2), by means of which an overall light distribution is producible, wherein each of the two headlamps (1, 2) comprises at least a first (3) and a second module (4), which are arranged separately from one another, wherein the first module (3) in each case comprises at least one light source (7) and at least one movable element (10, 11) which can be brought into the beam path of the light emitted by the light source (7) and the second module (4) in each case comprises a multiplicity of light sources (13) arranged in a matrix, and
- a control apparatus (14), by means of which the first modules (3) are actuatable in such a way that, by changing position of the at least one movable element (10, 11), a first partial light distribution (23, 36) of a light function is producible and by means of which the second modules (4) are actuatable in such a way that, by actuating individual light sources (13) or groups of light sources (13) of the multiplicity of light sources (13), a second partial light distribution (24, 37) of the same light function is producible and by means of which the headlamps (1, 2) are actuatable in such a way that, by overlaying the first (23, 36) and the second partial light distributions (24, 37), the overall light distribution is producible,
- comprising a device, coupled to the control apparatus, for capturing road users in front of the vehicle in the direction of travel,
**characterized in that**,
- when capturing road user (34, 53) in the direction of the light emission of the headlamp arrangement,
- the first partial light distribution (36) has a central region (M) with a headlight range that is less than the distance to the captured road user (34, 53) and two side regions (S₁, S₂) that are producible on both sides next to the central region (M) and that have headlight ranges that are greater than the headlight range in the central region (M), and
- the second partial light distribution (37) has headlight ranges only in the side regions (S₁, S₂) of the first partial light distribution (36) that are greater than the distance to the captured road user (34, 53).

9. Headlamp arrangement according to Claim 8,
**characterized in that**
the at least one light source (7) of the first module (3) and/or the multiplicity of light sources (13) of the second module (4) are light-emitting diodes and the movable element of the first module comprises at least one stop (10, 11) that is modifiable in terms of its position.

## Revendications

1. Procédé de commande d'un ensemble de phares d'un véhicule (22) présentant au moins deux phares (1, 2) disposés à distance mutuelle,
le procédé permettant de former une répartition globale de la lumière,
chacun des deux phares (1, 2) comportant au moins un premier module (3) et un deuxième module (4) séparés l'un de l'autre,
chacun des premiers modules (3) comportant au moins une source de lumière (7) et au moins un élément mobile (10, 11) qui peut être amené dans le parcours des rayons de la lumière émise par la source de lumière (7) et
chacun des deuxièmes modules (4) comportant plusieurs sources de lumière (13) disposées en matrice,
une première répartition partielle (23, 36) d'une fonction lumineuse des premiers modules (3) étant formée par modification de la position du ou des éléments mobiles (10, 11),
une deuxième répartition partielle (24, 37) de la même fonction lumineuse étant formée par les deuxièmes modules (4) par commande de différentes sources de lumière (13) ou de plusieurs groupes de sources de lumière (13) parmi les différentes sources de lumière (13) et
la répartition globale de la fonction lumineuse étant formée en superposant la première répartition partielle (23, 36) et la deuxième répartition partielle (24, 37),
**caractérisé en ce que**
au moins un véhicule (34, 53) en circulation dans la direction de la lumière émise par l'ensemble de phare est détecté,
la première répartition partielle (36) présente une partie centrale (M) dont la portée d'éclairage est plus petite que la distance s'étendant jusqu'au véhicule (34, 53) en circulation qui a été détecté et deux parties latérales (S₁, S₂) formées des deux côtés de la partie centrale (M) et dont les portées d'éclairage sont supérieures à la portée d'éclairage de la partie centrale (M) et
la deuxième répartition partielle (37) présente uniquement dans les parties latérales (S₁, S₂) de la première répartition partielle (36) des portées d'éclairage supérieures à la distance s'étendant jusqu'au véhicule (34, 53) en circulation qui a été détecté.

2. Procédé selon la revendication 1, **caractérisé en ce que** sur une frontière (32), la deuxième répartition partielle (24, 37) déborde de la limite clarté-obscurité de la première répartition partielle (23, 36) et la zone située en avant du véhicule (22) est ainsi divisée en une partie (30) proche du véhicule et une partie (31) éloignée du véhicule, la limite clarté-obscurité de la répartition globale de la lumière étant formée par la première répartition partielle (23, 36) dans la partie (30) proche du véhicule et par la deuxième répartition partielle (24, 37) dans la partie (31) éloignée du véhicule.

3. Procédé selon les revendications 1 ou 2,
**caractérisé en ce qu'**un corridor (38) exempt de lumière est formé dans la répartition globale de la lumière par la partie centrale (M) et les parties latérales (S₁, S₂) et présente un bord (39) formée par la partie centrale (M) dans la direction (QR) transversale par rapport au véhicule (22) et deux bords (40, 41) formés par les parties latérales (S₁, S₂) dans la direction longitudinale (LR) du véhicule (22), les bords (40, 41) formés par les parties latérales (S₁, S₂) étant formés essentiellement par la deuxième répartition partielle (37) et la distance dans la direction transversale (QR) entre les bords (40, 41) formés par les parties latérales (S₁, S₂) dépendant de la largeur du véhicule (34, 53) en circulation qui a été détecté.

4. Procédé selon l'une des revendications 1 à 3,
**caractérisé en ce que** la portée d'éclairage de la première répartition partielle (36) dans au moins une partie latérale (S₁, S₂) est abaissée en fonction de l'angle horizontal (φ) entre la direction de roulage (51) du véhicule (22) et la ligne (52) qui relie le véhicule (22) au véhicule (34, 53) en circulation qui a été détecté, de telle sorte qu'à partir d'un certain angle (φ) la partie latérale (S₁, S₂) n'est formée que par la deuxième répartition partielle (37).

5. Procédé selon la revendication 4, **caractérisé en ce que** la deuxième répartition partielle (37) est formée par au moins deux rayons lumineux (46, 47), au moins l'un (46) de ces deux rayons lumineux étant divisé en deux rayons lumineux partiels (48, 49) en fonction de l'angle horizontal (φ) entre la direction de roulage (51) du véhicule (22) et la ligne (52) qui relie le véhicule (22) au véhicule (34, 53) en circulation qui a été détecté, de telle sorte qu'un rayon lumineux partiel (48) forme seul une partie latérale (S₂) et l'autre rayon lumineux partiel (49) forme l'autre partie latérale (S₁) en même temps qu'au moins l'autre rayon lumineux (47) de la deuxième répartition partielle (37).

6. Procédé selon l'une des revendications 1 à 5,
**caractérisé en ce que** la deuxième répartition partielle (37) est divisée dans les parties latérales (S₁, S₂) en plusieurs parties (42, 43, 44, 45, 50), l'intensité d'éclairage diminuant de la partie (42, 50) située le plus à l'intérieur à la partie (45) située le plus à l'extérieur.

7. Procédé selon l'une des revendications 1 à 6,
**caractérisé en ce que** la fonction lumineuse est une fonction d'éclairage lointain.

8. Ensemble de phares pour un véhicule (22), présentant au moins deux phares (1, 2) disposés à distance mutuelle et permettant de former une répartition globale de la lumière,
chacun des deux phares (1, 2) comportant au moins un premier module (3) et un deuxième module (4) séparés l'un de l'autre,
chacun des premiers modules (3) comportant au moins une source de lumière (7) et au moins un élément mobile (10, 11) qui peut être amené dans le parcours des rayons de la lumière émise par la source de lumière (7) et chacun des deuxièmes modules (4) comportant plusieurs sources de lumière (13) disposées en matrice,
un ensemble de commande (14) par lequel les premiers modules (3) peuvent être commandés de telle sorte qu'une première répartition partielle (23, 36) d'une fonction lumineuse peut être formée par modification de la position du ou des éléments mobiles (10, 11), par lequel les deuxièmes modules (4) peuvent être commandés de telle sorte qu'une deuxième répartition partielle (24, 37) de la même fonction lumineuse est formée par commande de différentes sources de lumière (13) ou de plusieurs groupes de sources de lumière (13) parmi les différentes sources de lumière (13) et par lequel les phares (1, 2) peuvent être commandés de telle sorte que la répartition globale de la lumière peut être formée par superposition des premières (23, 36) et des deuxièmes (24, 37) répartitions de lumière, et
un dispositif raccordé à l'ensemble de commande et détectant les véhicules circulant en avant du véhicule dans la direction de son déplacement,
**caractérisé en ce que**
lors de la détection d'un véhicule (34, 53) en circulation dans la direction de l'émission de lumière de l'ensemble de phares,
la première répartition partielle (36) présente une partie centrale (M) dont la portée d'éclairage est plus petite que la distance s'étendant jusqu'au véhicule (34, 53) en circulation qui a été détecté et deux parties latérales (S₁, S₂) formées des deux côtés de la partie centrale (M) et dont les portées d'éclairage sont supérieures à la portée d'éclairage de la partie centrale (M) et
la deuxième répartition partielle (37) présente uniquement dans les parties latérales (S₁, S₂) de la première répartition partielle (36) des portées d'éclairage supérieures à la distance s'étendant jusqu'au véhicule (34, 53) en circulation qui a été détecté.

9. Ensemble de phare selon la revendication 8,
**caractérisé en ce que** la ou les sources de lumière (7) du premier module (3) et/ou les différentes sources de lumière (13) du deuxième module (4) sont des diodes luminescentes et **en ce que** l'élément mobile du premier module comporte au moins un écran (10, 11) dont la position peut être modifiée.
